(19) **Europäisches Patentamt / European Patent Office / Office européen des brevets**

(11) **EP 2 182 685 B1**

(12) **EUROPEAN PATENT SPECIFICATION**

(45) Date of publication and mention
of the grant of the patent:
**22.12.2010 Bulletin 2010/51**

(51) Int Cl.:
***H04L 12/56*** *(2006.01)*

(21) Application number: **08305758.8**

(22) Date of filing: **30.10.2008**

(54) **Method for splitting a multiplex packet stream and corresponding splitting system**

Verfahren zum Aufteilen eines Multiplexpaketstroms und entsprechendes Aufteilungssystem

Procédé de séparation d'un flux de paquets en multiplexage et système de séparation correspondant

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**05.05.2010 Bulletin 2010/18**

(73) Proprietor: **Alcatel Lucent
75008 Paris (FR)**

(72) Inventor: **Post, Georg
92620, LA VILLE DU BOIS (FR)**

(74) Representative: **Nicolle, Olivier et al
Alcatel Lucent
32 avenue Kléber
92700 Colombes (FR)**

(56) References cited:
**GB-A- 2 347 325       US-A1- 2003 147 385
US-A1- 2008 123 671**

## Description

The invention relates generally to fast packet processing nodes, in particular to a packet stream splitting method for use in a packet processing node and to an associated packet stream splitting system.

Packet multiplexing techniques are always more and more efficient. In particular, wavelength multiplexing technologies allow transmitting packet streams with very high rates. Transmission rates such as 100 Gbit/s per wavelength channel are now reachable and will be guaranteed by the network operators to convey the different flows they are in charge.

However, if such high rates enable network operators to increase the bandwidth available to their customers, technical difficulties appear in correctly processing the different flows comprised in packet streams transmitted at such transmission rates.

Indeed, if presently available electronic components allow the multiplexing of different flows to obtain very high-speed transmission rates, it is very difficult to perform data treatment such as packet switching or data packet inspection on the entire packet stream transmitted at such high-speed rates by a single processor or a single switch matrix.

One currently used solution to enable packet switching and packet inspection is to split the packet stream into a plurality of streams on parallel channels and to perform, in parallel, packet switching or data packet inspection by a plurality of packet processors at lower rates. More precisely, each one of the plurality of streams is carried by a channel to which a packet processor is associated. Then, the packet processor processes all the packets which have been associated to this channel during the demultiplexing. After having been processed, the packets coming from the different channels are multiplexed again to form a new packet stream which can be transmitted at a high rate.

To be really efficient, the packet stream must be split into streams of equal bandwidth. Furthermore, when incoming at the demultiplexer (ingress side of the packet processing node) which is in charge of splitting the packet stream, the packets belonging to a specific flow arrive with a specific sequence. This sequence must still exist in the packet stream created at the egress side of the packet processing node when the processed packets are multiplexed.

An easy known way to guarantee the same sequence at the ingress side and at the egress side of the packet processing node (comprising all the packet processors working in parallel) is to split the packet stream using a hash function. A hash function enables to identify the different flows by using specific keys and to split the different flow into the channels according to these keys. In the simplest cases, flows are identified as different source-destination pairs of 48-bit IP addresses and two 16-bit identifying ports, which together define 128-bit keys.

When the packets comprised in the packet stream arrive at the demultiplexer, keys are retrieved from their header and the hash function maps different keys into different channels. As the packets belonging to the same flow are identified with the same key, they all take the same path in the sense that they are all assigned to the same channel and processed by the same packet processor. Consequently, the sequence of the different packets of a same flow is not altered by the parallel processing.

However, the different flows comprised in the incoming packet stream are not always equally represented in the packet stream. For instance, a first flow may correspond to a video flow which contains many long packets and another flow may correspond to a control application flow containing few packets or packets of relatively small size. Thus the packet stream is often not split into streams of equal bandwidth. Packet processors associated to channels which would have received few packets will be underused. On the contrary, overload risks to occur in the processors associated with the channels into which many large flows would have been mapped according to the hash function.

Another method currently used to demultiplex the incoming packet is to use a round-robin scheme. According to such a method, the demultiplexer detects the arrival of each packet comprised in the packet stream and maintains a packet count per channel. The packet count represents the number of packets which has already been transmitted to a channel. When a packet arrives, the packet is transmitted to the channel which has the smallest packet count and the packet count of the channel is updated. This method guarantees that all the channels receive the same number of packets. Thus the original packet stream is split into sub-flows which have rigorously the same bandwidth.

However, by using this second method, the demultiplexer does not take into account the association of a packet to a specific flow and packets of the same flow will thus take different paths. Consequently, on the egress side of the packet processing node, a multiplexer with complex buffers and scheduler schemes must be implemented in order to avoid out-of sequence packets in each flow.

Other relevant methods are disclosed in patent documents GB 2347325 A, US 2003/0147385 A1 and US 2008/0123671 A1.

In view of the above, none of the static hash function or round-robin based demultiplexing method is completely satisfactory for use in a packet processing node since the first one only respects sequencing of the incoming packets and the second one only takes into consideration the load of the processing channels.

The aim of the present invention is to improve the demultiplexing of a packet stream incoming at a fast packet processing node by splitting the packet stream into a balanced set of channels while avoiding de-sequencing of packets belonging to a same flow.

To this end, a first object of the invention is relative to a method for splitting a multiplex packet stream received in a packet processing node into N packet streams on N corresponding processing channels, characterized in that it comprises:

- splitting said multiplex packet stream into a set of M intermediary packet streams, the number M being greater than the number N, by distributing each packet of the multiplex packet stream to one intermediary channel among a set of M intermediary channels according to a hash function;
- measuring load on each of said N corresponding processing channel;
and in that, for each intermediary channel, the method further comprises performing a mapping of said intermediary channel to one of said N processing channels for transmitting a packet carried on said intermediary channel to an associated processing channel,
wherein, for a current packet carried on said intermediary channel, said mapping can be dynamically updated as a function of:
- the N processing channel's measured loads; and
- the time difference between a reception time of said current packet and the reception time of the last preceding packet carried on said intermediary channel.

Advantageously, the mapping is updated only if the measured load of the associated processing channel is greater than a first load threshold and if the difference is greater than a time threshold T.

In this case, the mapping may be updated by associating the intermediary channel to one of the N processing channels the measured load of which is inferior to a second load threshold, the second load threshold being inferior or equal to said first load threshold.

Alternatively the mapping may be updated by identifying a subset of Z processing channels among said N processing channels which are the least loaded and associating said intermediary channel to one of the processing channels among said subset.

In addition, for each processing channel, the method takes into account the processing of a packet which has been transmitted on said processing channel, for a corresponding processing duration. The time threshold T is then set to be greater or equal to the difference between the longest processing duration and the shortest processing duration.

A second object of the invention is a splitting system for splitting a multiplex packet stream in a packet processing node into N packet streams on N corresponding processing channels, characterized in that it comprises:

- a set of M intermediary channels, the number M being greater than the number N;
- splitting means for splitting said multiplex packet stream into a set of M intermediary packet streams, by distributing each packet of the multiplex packet stream to one intermediary channel among said set of M intermediary channels according to a hash function;

- load measuring means to measure the load on each of said processing channel; and
- mapping means adapted to perform, for each intermediary channel, a mapping of said intermediary channel to one of said N processing channels, for transmitting a packet carried on said intermediary channel to an associated processing channel,
wherein, said mapping means are further adapted, for a current packet carried on said intermediary channel, to dynamically update said mapping as a function of:
- the N processing channel's measured loads; and
- the time difference between a reception time of said current packet and the reception time of the last preceding packet carried on said intermediary channel.

The features and advantages of the invention will become more apparent from the following detailed description with reference to the attached figures wherein:

- Figure 1 represents schematically a specific preferred architecture of different elements and their interactions for splitting a multiplex packet stream into a plurality of N packet streams on corresponding N processing channels according to the method of the invention.
- Figure 2 represents schematically an example of processing components located on processing channels through which N split packet streams are processed once the multiplex packet stream has been split.

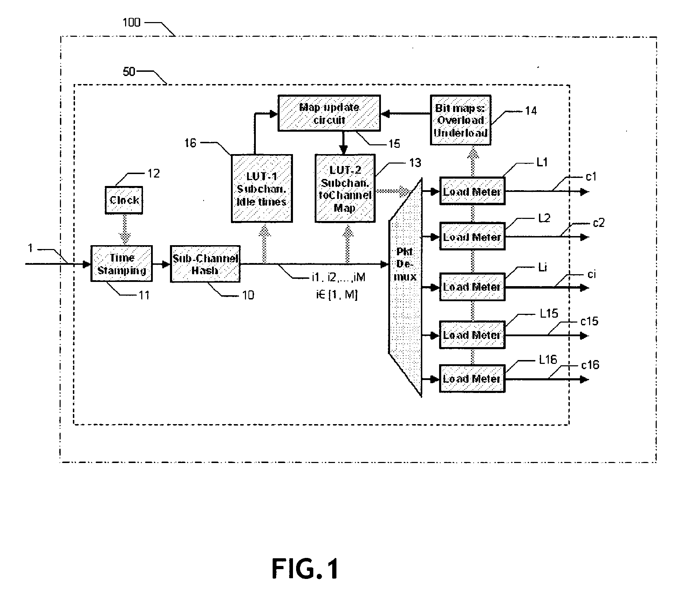

As shown on figure 1, a multiplex packet stream 1 is received at the ingress side of packet processing node 100. Such a multiplex packet stream 1 is composed of packets belonging to different flows which have been multiplexed together to enable a transmission at a high rate. Typically the transmission rate of multiplex packet stream 1 can be 10 Gbit/s or 100 Gbit/s and is composed from the multiplexing of one million of different flows.

As already explained above, the current electronic components are not fast enough to perform treatment such as deep packet processing or packet switching on the packets incoming with such a rate. Consequently, incoming multiplex packet stream 1 must be split into N packet streams on N processing channels c1, c2, ..., cN. The rate of the N packet streams is N times lower than the initial rate of incoming multiplex packet stream 1. Thus, N electronic components can process, in parallel, the packets of the N packet streams at an adapted rate.

As shown on figure 1, the method according to the invention differs from the current hash function splitting method or from the round robin splitting method as previously described, in that multiplex packet stream 1 is not split directly into N packet streams but is first split into a set of M intermediary packet streams, the number M being greater (by orders of magnitude) than the number N.

More precisely, splitting means 10 distribute each packet of multiplex stream 1 to one intermediary channel among a set of M intermediary channels i1, i2, ..., iM according to a hash function.

In addition, for each intermediary channel i1, i2,..., iM, the present method performs a mapping of said intermediary channel i1, i2,..., iM to one of the processing channels c1, c2, ..., cN. This mapping enables a packet which has been distributed on an intermediary channel i1, i2,..., iM to be transmitted to an associated processing channel c1, c2, ..., cN.

Furthermore, the respective load on each of the N different processing channels c1, c2, ..., cN is measured in order to detect potential overloaded processing channels and to dynamically update the mapping for balancing the global load into the respective processing channels c1, c2..., cN.

According to the present method, for each intermediary channel, the mapping can be dynamically updated. More precisely, for a current packet which has been distributed thanks to the hash function on the intermediary channel and which is thus carried on this intermediary channel, the mapping is updatable as a function of the N processing channel's measured load and the time difference between a reception time of the current packet and the reception time of the last preceding packet carried on the same intermediary channel.

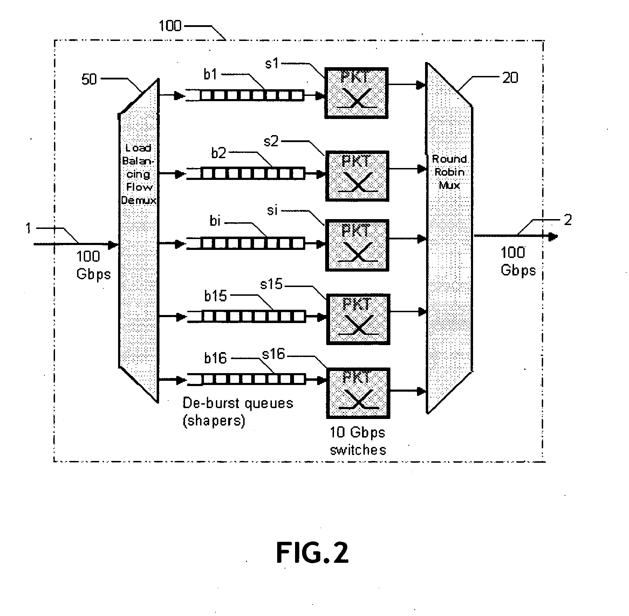

Referring to figures 1 and 2, the various features involved in the splitting of the multiplex packet stream and the various steps implemented for dynamically modifying the mapping of an intermediary channel with one of the N processing channels (N is set to 16 in the present example) and the conditions to be met for updating the mapping will be detailed in the case where the processing node is a large packet switch receiving an incoming multiplex Ethernet packet stream transmitted at a 100 Gbit/s rate.

This particular example is not restrictive and is intended solely for illustrative purpose. The present invention is in no way limited to the particular example embodiments explicitly shown in figures 1 and 2 and described herein.

As shown on figure 1, when a packet is received at the processing node 100, time stamping means 11 attach to it a reception time. More generally, the reception time corresponds to a time associated, at a reference point, to each packet of multiplex packet stream 1 received at processing node 100. The reference point may be located at any places between the reception interface of processing node 100 through which multiplex packet stream 1 is received and splitting means 10 as shown on figure 1.

Alternatively, the reference point may be located in splitting means 10. The reception time in then associated to a packet when the packet is distributed on one of the M intermediary channels i1, i2,..., iM.

The reception time value attached to a packet may correspond to the time indicated by an internal clock 12 when the packet is received. Clock 12 may have a nanosecond resolution in case of Ethernet packet processing. Indeed, as the smallest authorized packet size of an Ethernet packet is 500 bits, the inter-packet time (difference of time between the receptions of two successive packets in multiplex packet stream) is at worst 5 nanoseconds.

After having been stamped, a packet is distributed to one intermediary channel among a set of M intermediary channels i1, i2, ..., iM. More precisely, keys defined from bits of the incoming packets identifying the source, the source port, the destination and the destination port from which and to which a packet is transferred, are retrieved when the packet arrives at processing node 100. A hash function stored in splitting means 10, associates the different keys to a set of M intermediary channels i1, i2,..., iM such that each packet of multiplex packet stream 1 is assigned to one intermediary channel (labelled "ik" in the following where $1 \le k \le M$ ) among the set of M intermediary channels according to the association performed by the hash function.

Packet splitting operation, that is, the computation of the intermediary channel number k in {1, 2,..., M} using a hash function and the assignation of the received packet to the intermediary channel ik according to the result of the computation, can be performed thanks to fast logic electronic components such as a combination of Xor gates, within a 5 nanosecond processing time. This processing time satisfies the shortest inter-packet time between two successive packets of multiplex packet stream 1. The intermediary channel number k to which the packet is assigned and the packet timestamp (TsNew) of the packet are transferred to a first lookup table 16. This table, labeled "LUT-1" in Fig. 1, stores the new time value (TsNew) at the address associated with the intermediary channel number ik and simultaneously outputs the old time value (TsOld) belonging to the previous packet of intermediary channel number ik. The map-update unit 15, to be explained below, receives the time difference (TsNew - TsOld) in order to take further decisions.

After a packet has been distributed to one of the M intermediary channels ik in {i1, i2,..., iM}, it is transmitted to one of the sixteen processing channels c1, c2,..., c16. This transmission is performed according to a mapping which indicates, for each ik of the M intermediary channels i1, i2,..., iM, an associated processing channel C[ik] among the sixteen processing channels c1, c2,..., c16. More precisely mapping value C[ik] designates the channel processing among the set {c1,c2,...,

cN} associated to the intermediary channel ik.In order to store such a mapping, large packet switch 100 may be provided with a lookup table 13. Such a lookup table 13 may consist in a memory with a fast reading and writing access.

However, in order to have the possibility to avoid temporally the transmission of packets on a processing channel c1, c2,..., c16 which is currently overloaded, the mapping is, for a current packet carried on an intermediary channel, dynamically updatable.

More precisely, when a current packet carried on an intermediary channel ik in the set {i1, i2,..., iM} has to be transmitted to one of the processing channels in the set {c1, c2,..., c16}, mapping means 14, 15, first verify if the processing channel C[ik] in {c1, c2,..., c16}, currently associated with this intermediary channel ik in {i1, i2,..., iM} in lookup table 13, is overloaded.

If the associated processing channel C[ik] is overloaded, then mapping means 15, 16 also verify if the time difference between the reception time of the current packet (TsNew) carried on the intermediary channel ik in {i1, i2,..., iM} and the reception time of the last preceding packet (TsOld) carried on the same intermediary channel ik in {i1, i2,..., iM} is greater than a time threshold T. It can be noticed that both conditions (i.e. associated processing channel C[ik] in {c1, c2,..., c16} is overloaded and time difference is greater than a time threshold) may be checked in a different order.

When both of the conditions are met, updating means 15 is allowed to update the current mapping C[ik] stored in the lookup table 13 for the intermediary channel ik in {i1, i2,..., iM} on which the current packet is carried. The updating of the current mapping consists in associating the intermediary channel ik in {i1, i2,..., iM} carrying the current packet to another processing channel C'[ik] in {c1, c2,..., c16} the load of which is inferior to the load of the current associated processing channel C[ik] in {c1, c2,..., c16} stored in the lookup table 13. The current packet -- the one which was the cause for the update operation -- is then transmitted to the newly associated processing channel C'[ik] in {c1, c2,..., c16} and the new value C'[ik] is written to the lookup table 13. Otherwise, no updating is performed. The current packet is then transmitted to the same processing channel C[ik] in {c1, c2,..., c16} as the last preceding packet carried on this intermediary channel ik in {i1, i2,..., iM} (i.e. to the processing channel C[ik] in {c1, c2,..., c16} currently associated with the intermediary channel in the current mapping stored in the lookup table 13).

The next following paragraphs will illustrate the verification of the condition concerning the load. The choice of time threshold T will be described in a second step.

In order to detect that too many packets have already been transmitted on the current associated processing channel c1, c2,..., c16 in the mapping and that, in consequence, this processing channel c1, c2,..., c16 is overloaded, the respective loads of the sixteen different processing channels c1, c2,..., c16 are regularly measured.

Measure of the respective load may be performed by providing each processing channel c1, c2, ..., c16 with a load meter L1, L2, ...,L16. Each load meter L1, L2,..., L16 may comprise state registers necessary to perform load estimation. In particular, load meter L1 comprises a state register named incount[c1] used for storing the number of packet accepted on channel processing c1 since the last load estimation and a state register named load[c1] for storing the current load of processing channel c1.

An efficient to measure the respective loads is to use a signalprocessing algorithm such as, for instance, an exponential average estimation. When using an oriented code notation and referring to the above quoted state registers, the exponential average load estimation for processing channel c1 may be written as follows, where d denotes a positive integer number:

$$Load[c1] \mathrel{<{-}} load [c1] + (incount[c1] - load[c1])/ d)$$

This operation may be performed whenever an updating of lookup table 13 has induced an association of an intermediate channel ik in {i1, i2,..., iM} with the processing channel c1. The register incount[c1] is then reset to zero. In this example, the average estimation is performed over a period of approximately the last d update events.

Alternatively or in combination, another method which is more difficult to implement but which gives a better estimation is to use a rigorous feedback from the egress point of processing node 100, or from any other measuring point downstream (i.e. the measuring point may be located at any place on the processing channel before or after a processing node), to its ingress point. More precisely, when a packet is transmitted to a processing channel c1, c2,..., c16, mapping means 13 may be adapted to attach the number of the processing channel c1, c2,..., c16 to the packet. Then at the extremity of the processing channel c1, c2,..., c16, the attached information is retrieved and a corresponding byte or packet counter is updated. The counts per channel are periodically sent back to an ingress point of processing node 100 where the total number of incoming packet is stored. Consequently, it is possible to determine, for each processing channel c1, c2,..., c16, which proportion of the total number of incoming packets has been transmitted to it.

As already quoted, the measured loads are used to determine if a processing channel c1, c2,..., c16 is overloaded or underloaded relatively to the other processing channels c1, c2,..., c16. This determination may be performed by comparing the measured load of each processing channel c1, c2,..., c16 to a threshold load. The threshold load is generally a mean load which is calculated by performing an average on the sixteen measured loads.

In order to store the result of the above quoted determination, each load meter may comprise two additional state registers. In particular, load meter L1 may comprise:

- highload[c1] which is a Boolean set to 1 if processing channel c1 has a load above the mean load;
- lazy[c1] which is a Boolean set to 1 if processing channel c1 is among a subset of Z processing channels among the sixteen processing channels c1, c2,..., c16 which are the least loaded, Z being a number between 1 and N-1.

An efficient implementation to find a lazy processing channel c1, c2,..., c16 is to use combinatorial circuit 14. This circuit 14 may comprise a hierarchical comparator adapted to determine the processing channels c1, c2,..., c16 with minimum load and a hierarchical adder adapted to calculate the mean load among the sixteen processing channels c1, c2,..., c16. The circuit is further adapted to respectively set state register highload[c1] to 1 if the measured load of processing channel c1 is greater than the mean load and state register lazy [c1] to 1 if processing channel c1 is among the Z least loaded processing channels c1, c2,..., c16.

Alternatively register lazy[c1] may be a Boolean set to 1 if processing channel c1 has a load inferior to a load threshold which is function of the mean load. For instance, the load threshold may be a predetermined percentage of the mean load. The combinatorial circuit is then adapted to set state register lazy[c1] if the measured load of processing channel c1 is inferior to the load threshold.

Consequently, when a current packet carried on intermediary channel ik in {i1, i2,..., iM} has to be transmitted, mapping means are adapted to check the value of the highload state register of the processing channel C[ik] in {c1, c2,..., c16} currently associated with the intermediary channel ik in {i1, i2,..., iM}. If the highload state register of C[ik] has the value 1, mapping means 15, 16 check that time difference (TsNew - TsOld) is greater than the time threshold T. When the second condition is also met, updating means 15 associate the intermediary channel ik in {i1, i2,..., iM} with another processing channel C'[ik] in {c1, c2,..., c16} the lazy state register of which has the value 1.

Choice of the time threshold T will be now detailed.

As already quoted above, the purpose of the present invention is to split multiplex packet stream 1 incoming at processing node into sixteen balanced streams while avoiding out-of sequence packets when the 16 streams are re-multiplexed after been processed in parallel on the respective processing channels c1, c2,..., c16. Figure 2 shows one example of a switching system wherein the demultiplexing unit (labeled "Load balancing flow demux") feeds packets into a set of parallel processing and switching channels. This is just one of many possible uses of the present invention.

As shown on figure 2, each of the 16 processing channels c1, c2,..., c16 is provided with a sub-switch s1, s2,..., s16 adapted to process a packet carried on processing channel c1, c2,..., c16 in a corresponding processing duration pt1, pt2, ..., pt16. For example, sub-switch s1 located on processing channel c1 processes a packet in 10 µs (pt1=10µs), sub-switch s2 located on processing channel c2, needs 17 µs (pt2=17µs), whereas sub-switch s3, located on prcoessing channel c3, needs 23 µs (pt3=23µs) to perform an operation on a packet.

Time threshold T is chosen to be greater or equal to the difference between the longest processing duration and the shortest processing duration among the sixteen processing channels c1, c2,..., c16. Within the specific example, time difference is set to 13 µs (difference between the processing duration of sub-switch s3 and the processing duration of sub-switch s1).

Indeed, when the mapping is updated for a current packet carried on an intermediary channel ik in {i1, i2,..., iM}, said current packet is transmitted to a processing channel C'[ik] in {c1, c2,..., c16} different from the one labelled C[ik], to which the last preceding packet carried on the same intermediary channel ik in {i1, i2,..., iM}, has been transmitted. Consequently, processing duration needed to process these two packets may be different. In particular, the processing duration needed to process the current packet may be shorter than the processing duration needed to process the last preceding packet.

As a consequence, the sequence with which the two packets have entered the intermediary channel may be not maintained at the egress side of the processing channels. When time threshold T is greater or equal to the difference between the longest processing duration and the shortest processing duration, a potential inversion of the sequence of two consecutive packets carried on the same intermediary channel is avoided.

As a useful option, de-burst first-in-first-out (FIFO) buffers b1, b2,..., b16 are located before subswitches s1, s2, ..., s16 to shape the throughput of the stream carried on processing channel c1, c2, ..., c16 down to the admissible throughput necessary to correctly process the packets by each sub-switch s1, s2, ..., s16 in case of "burstification". A realistic maximal admissible delay introduced by a de-burst buffer b1, b2,..., b16 is for example 10 ms, meaning that a packet transmitted to a processing channel cN may wait up to 10 ms in de-burst buffer bN before being processed by sub-switch sN when buffer bN is full. On the contrary, when buffer bN is empty, same packet is processed immediately after being transmitted on processing channel cN.

Furthermore, after being processed, packets are re-multiplexed to form an outgoing multiplex packet stream 2. Considering that a packet comprises up to 1500 bytes (maximal authorized size for an Ethernet packet) and that the throughput of each processing channel c1, c2,..., c16 is up to 10Gbit/s, it takes up to 1.2 µs to multiplex a packet at re-multiplexer 20. Re-multiplexing may be performed according to a Round Robin method. In such a case re-multiplexer 20 takes a packet on a processing channel c1, c2, ..., c16 every 16 packets and a packet carried on a processing channel c1, c2,..., c16 can wait up to 19.2 $\mu$s (16 x 1.2 $\mu$s) before being multiplexed.

Potentially all delays introduced by de-burst buffers b1, b2, ..., b16 and re-mapping operations must be taken into account in the setting of time threshold T. According to the example illustrated on figure 2, a packet carried on channel c3 may be re-multiplexed, in the worst case, 10.042 ms (10ms + 0.023 ms + 0.019 ms) after having been transmitted from an intermediary channel to this processing channel c3. A packet carried on processing channel c1 may be re-multiplexed, in the most advantageous case, 0.011 ms (0.01 ms + 0.001 ms) after having been transmitted to this processing channel c1. Consequently, time threshold T is set greater or equal to Tmin, where Tmin is the difference between the processing duration (in the worst case) corresponding to processing c3 and the processing duration (in the most advantageous case) corresponding to processing channel c1. According to the different processing durations and delays of the components indicated on figure 2, the difference Tmin is equal to 10.031 ms.

The method according to the invention is especially efficient when the number M of intermediary channels i1, i2, ..., iM is high. Advantageously the number M of intermediary channels i1, i2, ..., iM is set such that M is greater or equal to $\sqrt{F \times N}$ where F is the number of the different flows multiplexed in multiplex packet stream 1. In the present example based on one million flows, M is equal to 4000 ( $4000 = \sqrt{10^6 \times 16}$ ). Such a number of intermediary channels i1, i2, ..., iM enables to have inter-packets times (also named idle times) greater than the typical processing duration (which is the sum of sub-switch processing duration, de-burst buffer delay and Round Robin re-multiplexing delay) necessary to process a packet carried on a processing channel c1, c2, ..., cN.

Indeed, assuming that, in the example illustrated on figures 1 and 2, the incoming transmission rate (at 1) is 10 Gbit/s and packets are split (at 10) into M = 4000 intermediary channels. In addition, if multiplex packet stream 1 incoming at processing node 100 is composed of flows equally represented and transmitted with a Poisson distribution and, if hash function 10 is balanced, then inter packet time by channel would be 200 $\mu$s (4000 x 50 ns = 200 $\mu$s). In such a case, one packet out of four thousand is transmitted to a fixed intermediary channel i1, i2, ..., iM.

However, such a uniform multiplex packet stream, with nearly constant bitrates per flow, is quite uncommon. It is far more frequent that multiplex packet stream 1 comprises flows whose arrivals have burstier-than-Poisson distribution with several hundred microseconds of average inter-packet time. Consequently, a sufficient percentage of packets will be carried on intermediary channels i1, i2, ..., iM with inter-packet times above 1 ms or even 10 ms which correspond to examples of time thresholds T calculated above. Each such inter-packet time higher than T creates an opportunity of dynamically improving the load balance of the de-multiplexer.

To avoid a sequence inversion, time threshold T can take all the values greater than the difference Tmin between the longest and the shortest processing durations in the processing channels. However, when time threshold T becomes too high, no more mapping updating operations occur since it is no longer possible to find two consecutive packets carried on the same intermediary channel separated by an idle time greater than time threshold T.

Advantageously, it is possible to adjust periodically time threshold T. Mapping-update means 15 may then be provided with a feedback control circuit (unrepresented on figure 1) to adjust time threshold T according to comparison of the ratio R = MUO / P with predetermined maximum and minimum authorized ratios and a target optimal ratio. R is the proportion of re-mapping packets, MUO is the number of mapping updating operations during a period of time and P is the number of packets transmitted from all M intermediary channels i1, i2, ..., iM to all processing channels c1, c2, ..., c16 during said period of time.

A particularly well adapted feedback circuit is a proportional-integral controller which can tune time difference threshold T as a function of the varying of the repartition flows statistics comprised in incoming multiplex packet streams 1. Such a controller counts periodically packet number P and the number of re-mapping operations MUO. Ratio R is compared to a target value Rs which corresponds to an optimal target proportion of re-mapping operations, for example Rs = 0.01. The controller computes an error value which is a linear combination of the time series of past difference terms R-Rs. The error value is then added to time threshold T to adjust it, taking care to keep T above Tmin, the processing-time difference.

It is to be noticed that the error value may be positive or negative and produces the correct sign of feedback. More precisely, if the measured R value is too high (i.e. too many mapping updating operations), time threshold T will automatically be increased. Consequently, fewer idle times between two consecutive packets carried on an intermediary channel i1, i2, ..., iM will be greater than time threshold T and less mapping updating operations will occurs. Conversely, if R value is too low, time threshold T will automatically decrease.

Having two conditions - one concerning the loads and one concerning the idle times -- for performing a map updating operation guarantees that the mapping is updated only if necessary and not dangerous with regard of the sequence of the packets in the different flows.

Indeed, it is to be noticed that it is preferable to not having too many map updating operation in order to not alter the functioning of the several processing elements located on the processing channels c1, c2, ..., c16. This is particularly the case when the processing elements perform deep packet inspection. For this reason, even if time difference is greater than the difference between the longest processing duration and the shortest processing duration among the processing channels c1, c2, ..., c16, it is no use to update a mapping if the associated processing channel c1, c2, ..., c16 is not overloaded.

Additionally, for the respect of the sequencing of consecutive packets, it is also not authorized to update the mapping when the intermediary channel's idle time is too low, even if the measured load of the processing channel c1, c2, ..., c16 currently associated with a intermediary channel i1, i2, ..., iM indicates the processing channel is overloaded.

Although, the various features and benefits of the invention have been described by referring to a large packet switch comprising sub-switches processing packets in parallel, the invention is not limited to such a processing node. The method of splitting a multiplex packet stream according to the invention may also be implemented in processing nodes such as, for instance, Ethernet line card or line receivers in which deep packet inspection is performed.

**Claims**

1. A method for splitting a multiplex packet stream (1) received in a packet processing node (100) into N packet streams on N corresponding processing channels (c1, c2, ..., cN), **characterized in that** it comprises :

   - splitting said multiplex packet stream (1) into a set of M intermediary packet streams, the number M being greater than the number N, by distributing each packet of the multiplex packet stream to one intermediary channel among a set of M intermediary channels (i1, i2, ..., iM) according to a hash function;
   - measuring load on each of said N corresponding processing channel (c1, c2, ..., cN);
   and **in that**, for each intermediary channel (i1, i2, ..., iM), the method further comprises performing a mapping of said intermediary channel to one of said N processing channels for transmitting a packet carried on said intermediary channel to an associated processing channel, wherein, for a current packet carried on said intermediary channel, said mapping can be dynamically updated as a function of:
   - the N processing channel's measured loads; and

   - the time difference between a reception time of said current packet and the reception time of the last preceding packet carried on said intermediary channel.

2. The method according to claim 1, **characterized in that** said mapping is updated only if the measured load of the associated processing channel (c1, c2, ..., cN) is greater than a first load threshold and if said time difference is greater than a time threshold T.

3. The method according to claim 2, **characterized in that** said mapping is updated by associating said intermediary channel (i1, i2, ..., iM) to one of the N processing channels (c1, c2, ..., cN) the measured load of which is inferior to a second load threshold, the second load threshold being inferior or equal to said first load threshold.

4. The method according to claim 2, **characterized in that** said mapping is updated by identifying a subset of Z processing channels among said N processing channels (c1, c2, ..., cN) which are the least loaded and associating said intermediary channel (i1, i2, ..., iM) to one of the processing channels (c1, c2, ..., cN) among said subset.

5. The method according to anyone of claims 2 to 4, **characterized in that**, each of the processing channel (c1, c2, ...,cN) having a corresponding processing duration (pt1, pt2, ..., ptN) for processing a packet, said time threshold T is chosen to be greater or equal to Tmin, Tmin being the difference between the longest processing duration and the shortest processing duration among said N processing channels.

6. The method according to claim 5, **characterized in that** it further comprises:

   - measuring periodically the ratio of the number of mapping updating operations during a period of time over the number of packets transmitted from said M intermediary channels (i1, i2, ..., iM) to said N processing channels (c1, c2, ..., cN) during said period of time;
   - comparing said measured ratio to predetermined maximum and minimum authorized ratios and to an optimal target ratio; and
   - adjusting periodically said time threshold T by increasing or decreasing said time threshold according to the result of the comparison.

7. The method according to anyone of the preceding claims, **characterized in that** measuring load on each of said N processing channels (c1, c2, ..., cN) is performed by using an exponential average estimation.

8. The method according to anyone of claims 1 to 7, **characterized in that** measuring load on each of said N processing channels (c1, c2, ..., cN) is performed by using information attached to each packet transmitted to each of said processing channels (c1, c2, ..., cN).

9. The method according to any one of the preceding claims, **characterized in that** the number M of intermediary channels is chosen as

$$M \geq \sqrt{F \times N}$$ where F is the number of the different flows multiplexed in said multiplex packet stream (1).

10. A splitting system (50) for splitting a multiplex packet stream (1) in a packet processing node (100) into N packet streams on N corresponding processing channels (c1, c2, ..., cN), **characterized in that** it comprises:

- a set of M intermediary channels (i1, i2, ..., iM), the number M being greater than the number N;
- splitting means (10) for splitting said multiplex packet stream (1) into a set of M intermediary packet streams, by distributing each packet of the multiplex packet stream (1) to one intermediary channel among said set of M intermediary channels (i1, i2, ..., iM) according to a hash function;
- load measuring means (L1, L2, ..., LN) to measure the load on each of said processing channel (c1, c2, ..., cN); and
- mapping means (13, 15, 16) adapted to perform, for each intermediary channel (i1, i2, ..., iM), a mapping of said intermediary channel to one of said N processing channels (c1, c2, ..., cN), for transmitting a packet carried on said intermediary channel (i1, i2, ..., iM) to an associated processing channel (c1, i2, ..., cN),
wherein, said mapping means (13, 15, 16) are further adapted, for a current packet carried on said intermediary channel (i1, i2, ..., iM), to dynamically update said mapping as a function of:
- the N processing channel's measured loads; and
- the time difference between a reception time of said current packet and the reception time of the last preceding packet carried on said intermediary channel (i1, i2, ..., iM).

11. The splitting system (50) according to claim 10, **characterized in that** it further comprises time stamping means for attaching a reception time to each packet of said multiplex packet stream upon their reception in said processing node (100).

12. The splitting system (50) according to any one of claims 10 or 11, **characterized in that** said mapping means (13, 15, 16) comprise:

- a lookup table (13) adapted to store, for each intermediary channel (i1, i2, ..., iM), the current mapping of said intermediary channel (i1, i2, ..., iM) to one of the said N processing channels (c1, c2, ..., cN);
- means (16) to determine, for each current packet carried on an intermediary channel (i1, i2, ..., iM), said time difference; and
- updating means (15) adapted to dynamically update the current mapping stored in said lookup table (13) for said intermediary channel (i1, i2, ..., iM) only if the measured load of the processing channel (c1, c2, ..., cN), currently mapped in said lookup table (13) to said intermediary channel (i1, i2, ..., iM) carrying said current packet, is greater than a first load threshold and if said difference is greater than a time threshold T.

13. The splitting system (50) according to claim 12, **characterized in that** said updating means (15) are adapted to dynamically update said current mapping stored in said lookup table (13) by associating said intermediary channel (i1, i2, ..., iM), carrying said current packet, to one of the N processing channels (c1, c2, ..., cN) having a measured load inferior to a second load threshold, the second threshold being inferior or equal to said first load threshold.

14. The splitting system (50) according to claim 12, **characterized in that** said updating means (15) are adapted to dynamically update said current mapping stored in said lookup table (13) by identifying a subset of Z processing channels among said N processing channels (c1, c2, ..., cN) which are the least loaded and associating said intermediary channel (i1, i2, ..., iM) to one of the processing channels (c1, c2, ..., cN) among said subset.

15. The splitting system (50) according to any one of claims 12 to 14, **characterized in that** each processing channel (c1, c2, ...,cN) is adapted to process a packet which has been transmitted on said processing channel (c1, c2, ...,cN), in a corresponding processing duration (pt1, pt2, ..., ptN), and **in that**, said time threshold T is chosen to be greater or equal to Tmin, Tmin being the difference between the longest processing duration and the shortest processing duration.

16. The splitting system (50) according to claim 15, **characterized in that** it further comprises adjusting means adapted to:

- measure periodically the ratio of the number of mapping updating operations during a period of time over the number of packets transmitted from said M intermediary channels (i1, i2, ..., iM) to said N processing channels (c1, c2, ..., cN) during said period of time;

- compare said measured ratio to predetermined maximum and minimum authorized ratios and to a target optimum ratio; and

- adjust periodically said time threshold T by increasing or decreasing said time threshold according to the result of the comparison.

**Patentansprüche**

1. Ein Verfahren zum Splitten eines in einem Paketverarbeitungsknoten (100) empfangenen Multiplex-Paketstroms (1) in N Paketströme auf N entsprechenden Verarbeitungskanäle (c1, c2, ..., cN), **dadurch gekennzeichnet, dass** es umfasst:

   - Splitten des besagten Multiplex-Paketstroms (1) in einen Satz von M intermediären Paketströmen, wobei die Anzahl M größer ist als die Anzahl N, durch das Verteilen eines jeden Pakets des Multiplex-Paketstroms auf einen der Zwischenkanäle eines Satzes von M Zwischenkanälen (i1, i2, ..., iM) gemäß einer Hash-Funktion;
   - Messen der Last auf einem jeden der besagten N entsprechenden Verarbeitungskanäle (c1, c2, ..., cN);
   und dass das Verfahren für jeden Zwischenkanal (i1, i2, ..., iM) weiterhin das Ausführen einer Abbildung des besagten Zwischenkanals auf einen der besagten N Verarbeitungskanäle für die Übertragung eines auf dem besagten Zwischenkanal transportierten Pakets an einen zugeordneten Verarbeitungskanal umfasst,
   wobei die besagte Abbildung für ein auf dem besagten Zwischenkanal momentan transportiertes Paket dynamisch aktualisiert werden kann als seine Funktion:
   - Der gemessenen Lasten der N Verarbeitungskanäle; und
   - der Zeitdifferenz zwischen einem Zeitpunkt des Empfangs des besagten momentanen Pakets und dem Zeitpunkt des Empfangs des vorhergehenden auf dem besagten Zwischenkanal transportierten Pakets.

2. Das Verfahren nach Anspruch 1, **dadurch gekennzeichnet, dass** die besagte Abbildung nur dann aktualisiert wird, wenn die gemessene Last des zugeordneten Verarbeitungskanals (c1, c2, ..., cN) größer ist als ein erster Lastgrenzwert, und wenn die Zeitdifferenz größer ist als ein Zeitgrenzwert T.

3. Das Verfahren nach Anspruch 2, **dadurch gekennzeichnet, dass** die besagte Abbildung aktualisiert wird, indem der besagte Zwischenkanal (i1, i2, ..., iM) einem der besagten N Verarbeitungskanäle (c1, c2, ..., cN) zugeordnet wird, dessen gemessene Last niedriger ist als ein zweiter Lastgrenzwert, wobei der zweite Lastgrenzwert niedriger als oder gleich dem besagten ersten Lastgrenzwert ist.

4. Das Verfahren nach Anspruch 2, **dadurch gekennzeichnet, dass** die Abbildung aktualisiert wird, indem ein Teilsatz von Z Verarbeitungskanälen der besagten N Verarbeitungskanäle (c1, c2, ..., cN) identifiziert wird, welche am wenigsten belastet sind, und der besagte Zwischenkanal (i1, i2, ..., iM) einem der Verarbeitungskanäle (c1, c2, ..., cN) des besagten Teilsatzes zugeordnet wird.

5. Das Verfahren nach einem beliebigen der Ansprüche 2 bis 4, **dadurch gekennzeichnet, dass** ein jeder der Verarbeitungskanäle (c1, c2, ..., cN) eine entsprechende Verarbeitungsdauer (pt1, pt2, ..., ptN) für die Verarbeitung eines Paketes aufweist und der besagte Zeitgrenzwert T höher als oder gleich Tmin gewählt wird, wobei Tmin die Differenz zwischen der längsten Verarbeitungsdauer und der kürzesten Verarbeitungsdauer unter den besagten N Verarbeitungskanälen ist.

6. Das Verfahren nach Anspruch 5, **dadurch gekennzeichnet, dass** es weiterhin umfasst:

   - Periodisches Messen der Quote der Anzahl von Abbildungsaktualisierungsvorgängen während einer Zeitspanne über die Anzahl von Paketen, welche während der besagten Zeitspanne von den besagten M Zwischenkanälen (i1, i2, ..., iM) an die besagten N Verarbeitungskanäle (c1, c2, ..., cN) übertragen werden;
   - Vergleichen der besagten gemessenen Quote mit vorbestimmten maximal und minimal zugelassenen Quoten und mit einer optimalen Zielquote; und
   - periodisches Anpassen des besagten Zeitgrenzwerts T durch Erhöhen oder Senken des besagten Zeitgrenzwerts gemäß dem Ergebnis des Vergleichs.

7. Das Verfahren nach einem beliebigen der vorstehenden Ansprüche, **dadurch gekennzeichnet, dass** das Messen der Last auf einem jeden der besagten N Verarbeitungskanäle (c1, c2, ..., cN) unter Anwendung einer exponentiellen Mittelschätzung durchgeführt wird.

8. Das Verfahren nach einem beliebigen der Ansprüche 1 bis 7, **dadurch gekennzeichnet, dass** das Messen der Last auf einem jeden der besagten N Verarbeitungskanäle (c1, c2, ..., cN) unter Anwendung einer jedem Paket, welches an einen jeden der besagten Verarbeitungskanäle (c1, c2, ..., cN) übertragen wird, anhängenden Information durchgeführt wird.

9. Das Verfahren nach einem beliebigen der vorstehenden Ansprüche, **dadurch gekennzeichnet, dass** die Anzahl M der Zwischenkanäle als $M \geq \sqrt{F \cdot N}$ gewählt wird, wobei F die Anzahl der verschiedenen in dem besagten Multiplex-Paketstrom (1) gemultiplexten Flüsse ist.

10. Ein Splittingsystem (50) zum Splitten eines Multiplex-Paketstroms (1) in einem Paketverarbeitungsknoten (100) in N Paketströme auf N entsprechenden Verarbeitungskanäle (c1, c2, ..., cN), **dadurch gekennzeichnet, dass** es umfasst:

    - Einen Satz von M Zwischenkanälen (i1, i2, ..., iM), wobei die Anzahl M höher ist als die Anzahl N;
    - Splittingmittel (10) zum Splitten des besagten Multiplex-Paketstroms (1) in einen Satz von M intermediären Paketströmen durch Verteilen eines jeden Pakets des Multiplex-Paketstroms (1) an einen der Zwischenkanäle des besagten Satzes von M Zwischenkanälen (i1, i2, ..., iM) gemäß einer Hash-Funktion;
    - Lastmessmittel (L1, L2, ..., LN) zum Messen der Last auf einem jeden der besagten Verarbeitungskanäle (c1, c2, ..., cN); und
    - Abbildungsmittel (13, 15, 16), welche dazu ausgelegt sind, für jeden Zwischenkanal (i1, i2, ..., iM) ein Abbilden des besagten Zwischenkanals auf einen der besagten N Verarbeitungskanäle (c1, c2, ..., cN) für die Übertragung eines auf dem besagten Zwischenkanal (i1, i2, ..., iM) transportierten Pakets an einen zugeordneten Verarbeitungskanal (c1, c2, ..., cN) auszuführen,
    wobei die besagten Abbildungsmittel (13, 15, 16) weiterhin dazu ausgelegt sind, für ein momentan auf dem besagten Zwischenkanal (i1, i2, ..., iM) transportiertes Paket die besagte Abbildung dynamisch zu aktualisieren als eine Funktion:
    - Der gemessenen Lasten der N Verarbeitungskanäle; und
    - der Zeitdifferenz zwischen einem Zeitpunkt des Empfangs des besagten momentanen Pakets und dem Zeitpunkt des Empfangs des vorangehenden auf dem besagten Zwischenkanal (i1, i2, ..., iM) transportierten Pakets.

11. Das Splittingsystem (50) nach Anspruch 10, **dadurch gekennzeichnet, dass** es weiterhin Zeitstempelmittel zum Anhängen einer Empfangszeit an jedes Paket des besagten Multiplex-Paketstroms nach dessen Empfang in dem besagten Verarbeitungsknoten (100) umfasst.

12. Das Splittingsystem (50) nach einem beliebigen der Ansprüche 10 oder 11, **dadurch gekennzeichnet, dass** die besagten Abbildungsmittel (13, 15, 16) umfassen:

    - Eine Lookup-Tabelle (13) welche dazu bestimmt ist, für jeden Zwischenkanal (i1, i2, ..., iM), die momentane Abbildung des besagten Zwischenkanals (i1, i2, ..., iM) auf einen der besagten N Verarbeitungskanäle (c1, c2, ..., cN) zu speichern;
    - Mittel (16) zum Bestimmen der besagten Zeitdifferenz für jedes momentan auf einem Zwischenkanal (i1, i2, ..., iM) transportierten Paket; und
    - Aktualisierungsmittel (15), welche dazu ausgelegt sind, die in der besagten Lookup-Tabelle (13) gespeicherte Abbildung für den besagten Zwischenkanal (i1, i2, ..., iM) nur dann dynamisch zu aktualisieren, wenn die gemessene Last des Verarbeitungskanals (c1, c2, ..., cN), welcher das besagte momentane Paket transportiert, größer als ein erster Lastgrenzwert ist und die besagte Differenz größer als ein Zeitgrenzwert T ist.

13. Das Splittingsystem (50) nach Anspruch 12, **dadurch gekennzeichnet, dass** die Aktualisierungsmittel (15) dazu ausgelegt sind, die besagte momentane in der besagten Lookup-Tabelle (13) gespeicherte Abbildung durch Zuordnen des besagten Zwischenkanals (i1, i2, ..., iM), welcher das besagte momentane Paket transportiert, zu einem der N Verarbeitungskanäle (c1, c2, ..., cN), dessen gemessene Last niedriger ist als ein zweiter Lastgrenzwert, dynamisch zu aktualisieren, wobei der zweite Grenzwert niedriger als der oder gleich dem besagte(n) ersten Lastgrenzwert ist.

14. Das Splittingsystem (50) nach Anspruch 12, **dadurch gekennzeichnet, dass** die besagten Aktualisierungsmittel (15) dazu ausgelegt sind, die besagte momentane in der besagten Lookup-Tabelle (13) gespeicherte Abbildung durch das Identifizieren eines Teilsatzes von Z Verarbeitungskanälen der besagten N Verarbeitungskanälen (c1, c2, ..., cN), welche am wenigsten belastet sind, und durch das Zuordnen des besagten Zwischenkanals (i1, i2, ..., iM) zu einem der besagten Verarbeitungskanäle (c1, c2, ..., cN) des besagten Teilsatzes dynamisch zu aktualisieren.

15. Das Splittingsystem (50) nach einem beliebigen der Ansprüche 12 bis 14, **dadurch gekennzeichnet, dass** jeder Verarbeitungskanal (c1, c2, ..., cN) dazu ausgelegt ist, ein Paket, welches auf dem besagten Verarbeitungskanal (c1, c2, ..., cN) übertragen worden ist, in einer entsprechenden Verarbeitungsdauer (pt1, pt2, ..., ptN) zu verarbeiten,

und dass der besagte Zeitgrenzwert T größer als oder gleich Tmin gewählt wird, wobei Tmin die Differenz zwischen der längsten Verarbeitungsdauer und der kürzesten Verarbeitungsdauer ist.

16. Das Splittingsystem (50) nach Anspruch 15, **dadurch gekennzeichnet, dass** es weiterhin Anpassungsmittel umfasst, welche für die folgenden Schritte ausgelegt sind:

- Periodisches Messen der Quote der Anzahl von Abbildungsaktualisierungsvorgängen während einer Zeitspanne über die Anzahl von während der besagten Zeitspanne von den besagten M Zwischenkanälen (i1, i2, ..., iM) an die besagten N Verarbeitungskanäle (c1, c2, ..., cN) übertragenen Paketen;
- Vergleichen der besagten gemessenen Quote mit vorbestimmten maximal und minimal zulässigen Quoten und mit einer optimalen Zielquote; und
- periodisches Anpassen des besagten Zeitgrenzwertes T durch Erhöhen oder Senken des besagten Zeitgrenzwertes gemäß dem Ergebnis des Vergleichs.

**Revendications**

1. Procédé de séparation d'un flux de paquets multiplexés (1) reçus dans un noeud de traitement de paquets (100) en N flux de paquets sur N canaux de traitement correspondants (c1, c2, ..., cN), **caractérisé en ce qu'**il comprend :

- la séparation dudit flux de paquets multiplexés (1) en un ensemble de M flux de paquets intermédiaires, le nombre M étant supérieur au nombre N, en répartissant chaque paquet du flux de paquets multiplexés sur un canal intermédiaire parmi un ensemble de M canaux intermédiaires (i1, i2, ..., iM) selon une fonction de hachage ;
- la mesure de la charge sur chacun desdits N canaux de traitement correspondants (c1, c2, cN) ;
et **en ce que**, pour chaque canal intermédiaire (i1, i2, ..., iM), le procédé comprend en outre la réalisation d'un mappage dudit canal intermédiaire sur l'un desdits N canaux de traitement pour transmettre un paquet porté sur ledit canal intermédiaire à un canal de traitement associé, dans lequel, pour un paquet courant porté sur ledit canal intermédiaire, ledit mappage peut être mis à jour dynamiquement en fonction :
- des charges mesurées des N canaux de traitement ; et
- de la différence temporelle entre un temps de réception dudit paquet courant et le temps de réception du dernier paquet précédent porté sur ledit canal intermédiaire.

2. Procédé selon la revendication 1, **caractérisé en ce que** ledit mappage est mis à jour seulement si la charge mesurée du canal de traitement associé (c1, c2, ..., cN) est supérieure à un premier seuil de charge et si ladite différence temporelle est supérieure à un seuil temporel T.

3. Procédé selon la revendication 2, **caractérisé en ce que** ledit mappage est mis à jour en associant ledit canal intermédiaire (i1, i2, ..., iM) à l'un des N canaux de traitement (c1, c2, ..., cN) dont la charge mesurée est inférieure à un deuxième seuil de charge, le deuxième seuil de charge étant inférieur ou égal audit premier seuil de charge.

4. Procédé selon la revendication 2, **caractérisé en ce que** ledit mappage est mis à jour en identifiant un sous-ensemble de Z canaux de traitement parmi lesdits N canaux de traitement (c1, c2, ..., cN) qui sont les moins chargés et en associant ledit canal intermédiaire (i1, i2, ..., iM) à l'un des canaux de traitement (c1, c2, ..., cN) parmi ledit sous-ensemble.

5. Procédé selon l'une quelconque des revendications 2 à 4, **caractérisé en ce que** chacun des canaux de traitement (c1, c2, ..., cN) ayant une durée de traitement correspondante (pt1, pt2, ..., ptN) pour traiter un paquet, ledit seuil temporel T est choisi de manière à être supérieur ou égal à Tmin, Tmin étant la différence entre la durée de traitement la plus longue et la durée de traitement la plus courte parmi lesdits N canaux de traitement.

6. Procédé selon la revendication 5, **caractérisé en ce qu'**il comprend en outre :

- la mesure périodique du rapport du nombre d'opérations de mise à jour de mappage durant une période temporelle sur le nombre de paquets transmis depuis lesdits M canaux intermédiaires (i1, i2, ..., iM) vers lesdits N canaux de traitement (c1, c2, ..., cN) durant ladite période temporelle ;
- la comparaison dudit rapport mesuré avec des rapports maximum prédéterminé et minimum autorisé et avec un rapport cible optimal ; et
- l'ajustement périodique dudit seuil temporel T en augmentant ou diminuant ledit seuil temporel selon le résultat de la comparaison.

**7.** Procédé selon l'une quelconque des revendications précédentes, **caractérisé en ce que** la mesure de charge sur chacun desdits N canaux de traitement (c1, c2, ..., cN) est réalisée en utilisant une estimation moyenne exponentielle.

**8.** Procédé selon l'une quelconque des revendications 1 à 7, **caractérisé en ce que** la mesure de charge sur chacun desdits N canaux de traitement (c1, c2, ..., cN) est réalisée en utilisant des informations jointes à chaque paquet transmis à chacun desdits canaux de traitement (c1, c2, ..., cN).

**9.** Procédé selon l'une quelconque des revendications précédentes, **caractérisé en ce que** le nombre M de canaux intermédiaires est choisi de telle sorte que $M \geq \sqrt{F \times N}$ où F est le nombre des différents flux multiplexés dans ledit flux de paquets multiplexés (1).

**10.** Système de séparation (50) pour séparer un flux de paquets multiplexés (1) dans un noeud de traitement de paquets (100) en N flux de paquets sur N canaux de traitement correspondants (c1, c2, ..., cN), **caractérisé en ce qu'**il comprend :

- un ensemble de M canaux intermédiaires (i1, i2, ..., iM), le nombre M étant supérieur au nombre N ;
- des moyens de séparation (10) pour séparer ledit flux de paquets multiplexés (1) en un ensemble de M flux de paquets intermédiaires, en répartissant chaque paquet du flux de paquets multiplexés (1) sur un canal intermédiaire parmi ledit ensemble de M canaux intermédiaires (i1, i2, ..., iM) selon une fonction de hachage;
- des moyens de mesure de charge (L1, L2, ..., LN) pour mesurer la charge sur chacun desdits canaux de traitement (c1, c2, ..., cN) ; et
- des moyens de mappage (13, 15, 16) adaptés pour réaliser, pour chaque canal intermédiaire (i1, i2, ..., iM), un mappage dudit canal intermédiaire sur l'un desdits N canaux de traitement (c1, c2, ..., cN), pour transmettre un paquet porté sur ledit canal intermédiaire (i1, i2, ..., iM) à un canal de traitement associé (c1, i2, ..., cN), dans lequel lesdits moyens de mappage (13, 15, 16) sont en outre adaptés, pour un paquet courant porté sur ledit canal intermédiaire (i1, i2, ..., iM), pour mettre à jour dynamiquement ledit mappage en fonction :
- des charges mesurées des N canaux de traitement ; et
- de la différence temporelle entre un temps de réception dudit paquet courant et le temps de réception du dernier paquet précédent porté sur ledit canal intermédiaire (i1, i2, ..., iM).

**11.** Système de séparation (50) selon la revendication 10, **caractérisé en ce qu'**il comprend en outre des moyens d'estampille temporelle pour joindre un temps de réception à chaque paquet dudit flux de paquets multiplexés suite à leur réception dans ledit noeud de traitement (100).

**12.** Système de séparation (50) selon l'une quelconque des revendications 10 ou 11, **caractérisé en ce que** lesdits moyens de mappage (13, 15, 16) comprennent :

- une table de consultation (13) adaptée pour stocker, pour chaque canal intermédiaire (i1, i2, ..., iM), le mappage courant dudit canal intermédiaire (i1, i2, ..., iM) vers l'un desdits N canaux de traitement (c1, c2, ..., cN) ;
- des moyens (16) pour déterminer, pour chaque paquet courant porté sur un canal intermédiaire (i1, i2, ..., iM), ladite différence temporelle ; et
- des moyens de mise à jour (15) adaptés pour mettre à jour dynamiquement le mappage courant stocké dans ladite table de consultation (13) pour ledit canal intermédiaire (i1, i2, ..., iM) seulement si la charge mesurée du canal de traitement (c1, c2, ..., cN) présentement mappé dans ladite table de consultation (13) sur ledit canal intermédiaire (i1, i2, ..., iM) portant ledit paquet courant, est supérieure à un premier seuil de charge et si ladite différence est supérieure à un seuil temporel T.

**13.** Système de séparation (50) selon la revendication 12, **caractérisé en ce que** lesdits moyens de mise à jour (15) sont adaptés pour mettre à jour dynamiquement ledit mappage courant stocké dans ladite table de consultation (13) en associant ledit canal intermédiaire (i1, i2, ..., iM), portant ledit paquet courant, à l'un des N canaux de traitement (c1, c2, ..., cN) ayant une charge mesurée inférieure à un deuxième seuil de charge, le deuxième seuil de charge étant inférieur ou égal audit premier seuil de charge.

**14.** Système de séparation (50) selon la revendication 12, **caractérisé en ce que** lesdits moyens de mise à jour (15) sont adaptés pour mettre à jour dynamiquement ledit mappage courant stocké dans ladite table de consultation (13) en identifiant un sous-ensemble de Z canaux de traitement parmi lesdits N canaux de traitement (c1, c2, ..., cN) qui sont les moins chargés et en associant ledit canal intermédiaire (i1, i2, ..., iM) à l'un des canaux de traitement (c1, c2, ..., cN) parmi ledit sous-ensemble.

**15.** Système de séparation (50) selon l'une quelconque des revendications 12 à 14, **caractérisé en ce que** chaque canal de traitement (c1, c2, ..., cN) est adapté pour traiter un paquet qui a été transmis sur ledit canal de traitement (c1, c2, ..., cN) lors d'une durée de traitement correspondante (pt1, pt2, ..., ptN), et **en ce que** ledit seuil temporel T est choisi de manière à être supérieur ou égal à Tmin, Tmin étant la différence entre la durée de traitement la plus longue et la durée de traitement la plus courte.

**16.** Système de séparation (50) selon la revendication 15, **caractérisé en ce qu'**il comprend en outre des moyens d'ajustement adaptés pour :

- mesurer périodiquement le rapport du nombre d'opérations de mise à jour de mappage durant une période temporelle sur le nombre de paquets transmis depuis lesdits M canaux intermédiaires (i1, i2, ..., iM) vers lesdits N canaux de traitement (c1, c2, ..., cN) durant ladite période temporelle ;
- comparer ledit rapport mesuré à des rapports maximum prédéterminé et minimum autorisé et à un rapport cible optimal ; et
- ajuster périodiquement ledit seuil temporel T en augmentant ou diminuant ledit seuil temporel selon le résultat de la comparaison.

FIG.1

**FIG.2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2347325 A
- US 20030147385 A1
- US 20080123671 A1